# EUROPEAN PATENT APPLICATION

(11) **EP 2 091 001 A1**
(43) Date of publication of application: **19.08.2009**
(21) Application number: 09152616.0
(22) Date of filing: 11.02.2009
(51) Int. Cl.: G06F 21/20, H04L 29/06

(54) **Info card selector reception of identity provider based data pertaining to info cards**

(30) Priority: 12.02.2008 US 30063; 11.02.2008 US 29373
(71) Applicant: Novell, Inc., Provo, Utah 84606-6169 (US)
(72) Inventor: Sermersheim, James G., Woodland Hills, UT 84653 (US); Buss, Duane F, West Mountain, UT 84651 (US); Doman, Thomas E., Pleasant Grove, UT 84062 (US); Hodgkinson, Andrew A., Pleasant Grove, UT 84062 (US); Olds, Dale R., Draper, UT 84020 (US); Sanders, Daniel S., Orem, UT 84057 (US)
(74) Representative: Hanna, Peter William Derek

(57) **Abstract**

A computer system accesses metadata (240) about an information card (220). The metadata can be stored locally (235) or remotely (for example, at an identity provider (135)). A metadata engine (245) can be used to generate data to be provided to the user from the metadata: this data can take any desired form, such as an advertisement (705), a state of the user's account (710), or a policy update (715), among other possibilities.

## Description

### FIELD OF THE INVENTION

This invention pertains to on-line transactions, and more particularly to presenting cues regarding the state of information used in performing on-line transactions.

### BACKGROUND OF THE INVENTION

When a user interacts with sites on the Internet (hereafter referred to as "service providers" or "relying parties"), the service provider often expects to know something about the user that is requesting the services of the provider. The typical approach for a service provider is to require the user to log into or authenticate to the service provider's computer system. But this approach, while satisfactory for the service provider, is less than ideal to the user. First, the user must remember a username and password for each service provider who expects such information. Given that different computer systems impose different requirements, and the possibility that another user might have chosen the same username, the user might be unable to use the same username/password combination on each such computer system. (There is also the related problem that if the user uses the same username/password combination on multiple computer systems, someone who hacks one such computer system would be able to access other such computer systems.) Second, the user has no control over how the service provider uses the information it stores. If the service provider uses the stored information in a way the user does not want, the user has relatively little ability to prevent such abuse, or recourse after the fact.

To address this problem, new systems have been developed that allow the user a measure of control over the information stored about the user. Windows Cardspace^{™} (sometimes called CardSpace) is a Microsoft implementation of an identity meta-system that offers a solution to this problem. (Microsoft, Windows, and CardSpace are either registered trademarks or trademarks of Microsoft Corporation in the United States and/or other countries.) A user can store identity information with an identity provider the user trusts. When a service provider wants some information about the user, the user can control the release of information stored with the identity provider to the service provider. The user can then use the offered services that required the identity information.

As users interact with systems, such as relying parties, the user's actions generate information about the user and the particular information cards being used. In a similar manner, information can be generated from other sources: for example, if a third party were to try and spoof the user's identity to use the information card, this is also data about the information card. But the user does not have a way of finding out this information and factoring it into his or her selection of an information card.

A need remains for a way to addresses these and other problems associated with the prior art.

### SUMMARY OF THE INVENTION

The present invention provides an apparatus, method and computer program in accordance with claims which follow. In an embodiment of the invention, a system includes a metadata engine. The metadata engine is capable of providing information to the user about metadata applicable to an information card. The user can then use the metadata in using the system.

The foregoing and other features, objects, and advantages of the invention will become more readily apparent from the following detailed description, which proceeds with reference to the accompanying drawings.

### BRIEF DESCRIPTION OF THE DRAWINGS

FIG. 1 shows a sequence of communications between a client, a relying party, and an identity provider.
FIG. 2 shows a system to use metadata to provide information to a user using metadata, according to an embodiment of the invention.
FIG. 3 shows a system to use metadata to provide information to a user using metadata, according to a second embodiment of the invention.
FIG. 4 shows the client and identity provider in the system of FIG. 3 communicating via multiple channels.
FIG. 5 shows the transmission of encrypted metadata in the system of FIG. 3.
FIG. 6 shows the system of FIG. 3 operating as a push model.
FIG.7 shows the metadata engine of FIGs.2 and 3 using metadata to provide information to a user.
FIG. 8 shows a flowchart of a procedure to use metadata to provide information to a user in the systems of FIGs. 2 and 3.
FIGs. 9A-9B show a flowchart of a procedure for a card selector to receive metadata in the system of FIGs. 2 and 3.
FIG. 10 shows a flowchart of a procedure to use the metadata to provide information to a user in the systems of FIGs. 2 and 3.

### DETAILED DESCRIPTION OF THE PREFERRED EMBODIMENT

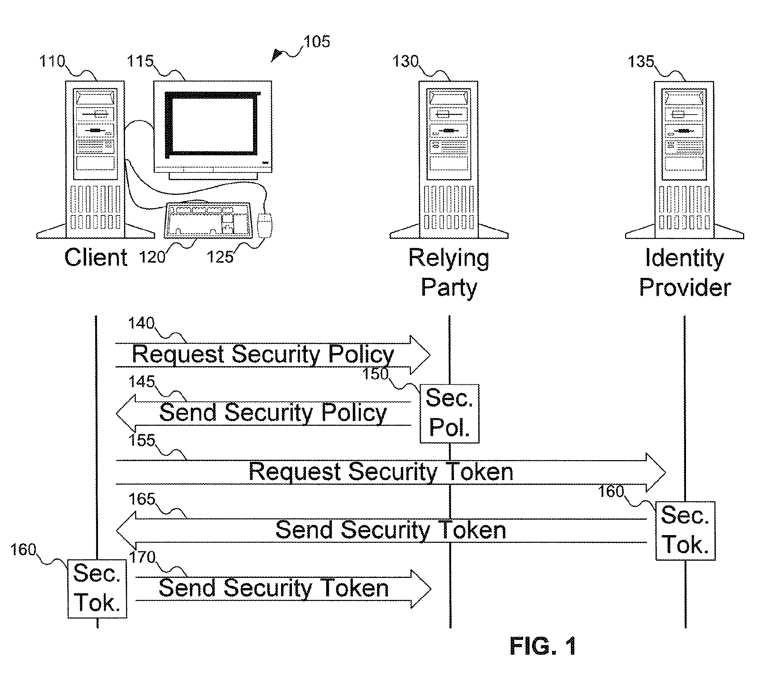

Before explaining the invention, it is important to understand the context of the invention. FIG.1 shows a sequence of communications between a client, are lying party, and an identity provider. For simplicity, each party (the client, the relying party, and the identity provider) may be referred to by their machines. Actions attributed to each party are taken by that party's machine, except where the context indicates the actions are taken by the actual party.

In FIG. 1, computer system 105, the client, is shown as including computer 110, monitor 115, keyboard 120, and mouse 125. A person skilled in the art will recognize that other components can be included with computer system 105: for example, other input/output devices, such as a printer. In addition, FIG. 1 does not show some of the conventional internal components of computer system 105; for example, a central processing unit, memory, storage, etc. Although not shown in FIG. 1, a person skilled in the art will recognize that computer system 105 can interact with other computer systems, such as relying party 130 and identity provider 135, either directly or over a network (not shown) of any type. Finally, although FIG. 1 shows computer system 105 as a conventional desktop computer, a person skilled in the art will recognize that computer system 105 can be any type of machine or computing device capable of providing the services attributed herein to computer system 105, including, for example, a laptop computer, a personal digital assistant (PDA), or a cellular telephone.

Relying party 130 is a machine managed by a party that relies in some way on the identity of the user of computer system 105. The operator of relying party 130 can be any type of relying party. For example, the operator of relying party 130 can be a merchant running a business on a website. Or, the operator of relying party 130 can be an entity that offers assistance on some matter to registered parties. Relying party 130 is so named because it relies on establishing some identifying information about the user.

Identity provider 135, on the other hand, is managed by a party responsible for providing identity information (or other such information) about the user for consumption by the relying party. Depending on the type of information identity provider 135 stores for a user, a single user might store identifying information with a number of different identity providers 135, any of which might be able to satisfy the request of the relying party. For example, identity provider 135 might be a governmental agency, responsible for storing information generated by the government, such as a driver's license number or a social security number. Or, identity provider 135 might be a third party that is in the business of managing identity information on behalf of users.

The conventional methodology of releasing identity information can be found in a number of sources. One such source is Microsoft Corporation, which has published a document entitled Introducing Windows CardSpace, which can be found on the World Wide Web at http://msdn2.microsoft.com/en-us/library/aa480189.aspx. To summarize the operation of Windows CardSpace, when a user wants to access some data from relying party 130, computer system 105 requests the security policy of relying party 130, as shown in communication 140, which is returned in communication 145 assecuritypolicy150. Security policy 150 is a summary of the information relying party 130 needs, how the information should be formatted, and so on. Once computer system 105 has security policy 150, computer system 105 can identify which information cards will satisfy security policy 150. Different security policies might result in different information cards being usable. For example, if relying party 130 simply needs an e-mail address, the information cards that will satisfy this security policy will be different from the information cards that satisfy a security policy requesting the user's full name, mailing address, and social security number. The user can then select an information card that satisfies security policy 150.

Once the user has selected an acceptable information card, computer system 105 uses the selected information card to transmit a request for a security token from identity provider 135, as shown in communication 155. This request can identify the data to be included in the security token, the credential that identifies the user, and other data the identity provider needs to generate the security token. Identity provider 135 returns security token 160, as shown in communication 165. Security token 160 includes a number of claims, or pieces of information, that include the data the user wants to release to the relying party. Security token 160 is usually encrypted in some manner, and perhaps signed and/or time-stamped by identity provider 135, so that relying party 130 can be certain that the security token originated with identity provider 135 (as opposed to being spoofed by someone intent on defrauding relying party 130). Computer system 105 then forwards security token 160 to relying party 130, as shown in communication 170.

In addition, the selected information card can be a self-issued information card: that is, an information card issued not by an identity provider, but by computer system 105 itself. In that case, identity provider 135 effectively becomes part of computer system 105.

In this model, a person skilled in the art will recognize that because all information flows through computer system 105, the user has a measure of control over the release of the user's identity information. Relying party 130 only receives the information the user wants relying party 130tohave,and does not store that information on behalf of the user (although it would be possible for relying party 130 to store the information in security token 160: there is no effective way to prevent such an act).

But, as noted above, there might be information about the information cards - metadata - stored either locally or externally (such as on an identity provider) that might be of value to the user. If the user is not provided this metadata, the user makes less than a fully-informed decision in selecting an information card.

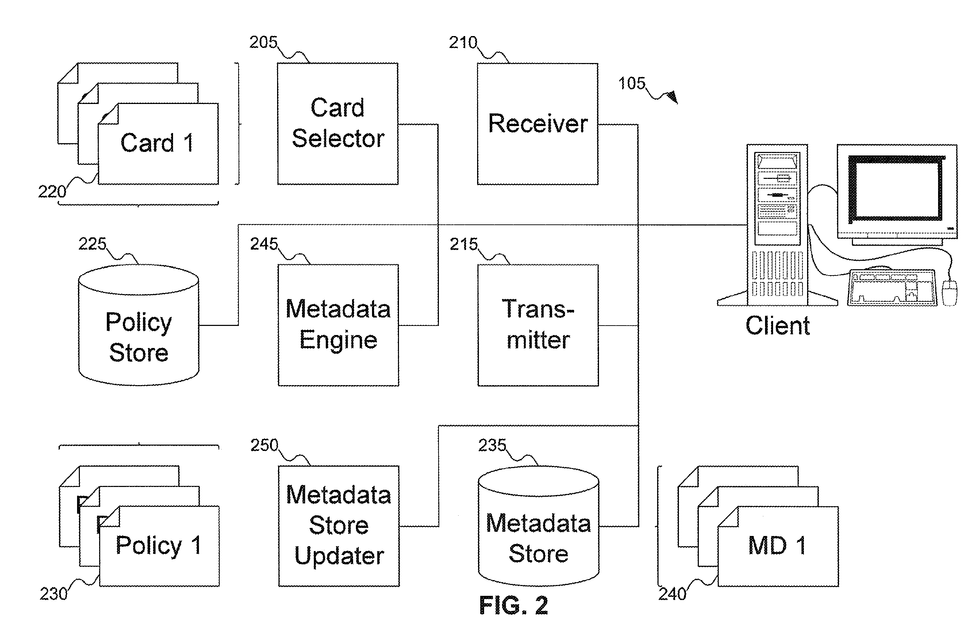

Now that the problem - accessing and using the metadata that the user is otherwise not aware of- is understood, a solution to the problem can be explained. FIG. 2 shows a system to use metadata to provide information to a user using metadata, according to an embodiment of the invention. In FIG. 2, computer system 105 includes card selector 205, receiver 210, and transmitter 215. Card selector 205 is responsible for enabling a user to select information card 220 that satisfies the security policy. Receiver 210 is responsible for receiving data transmitted to computer system 105, and transmitter 215 is responsible for transmitting information from computer system 105. These components are the same as those found in computer system 105 as shown in FIG. 1.

Computer system 105 also includes policy store 225. Policy store 225 stores policies, such as policy 230, which can specify what metadata the card selector can use (and request from an identity provider), that can be of value to a user.

Computer system 105 also includes metadata store 235. Metadata store 235 stores metadata, such as metadata 240, about the information cards. The metadata in metadata store 235 can be identified by the policies in policy store 225. Examples of metadata that can be stored in metadata store 235 can include the last time the information card was used, the frequency with which the information card is used, whether the information card was last used successfully, a date and/or time when the information card will expire, a balance associated with the information card, among other possibilities.

Computer system 105 also includes metadata engine 245. Metadata engine 245 is responsible for processing metadata 240 to determine what information can be presented to the user, and the form in which the data can be presented. One way in which metadata 240 can be presented to the user, metadata 240 can be presented in a visual form to the user: for example, by flashing information to the user on the screen. Related U.S. Patent Application Serial No. , titled "VISUAL AND NON-VISUAL CUES FOR CONVEYING STATE OF INFORMATION CARDS, ELECTRONIC WALLETS, AND KEYRINGS", filed , can be used to provide information to a user.

Finally, computer system 105 includes metadata store updater 250. Metadata store updater 250 is responsible for updating metadata store 235. This update can be based on actions taken by the user or any other source of information that affects the data stored in metadata store 235.

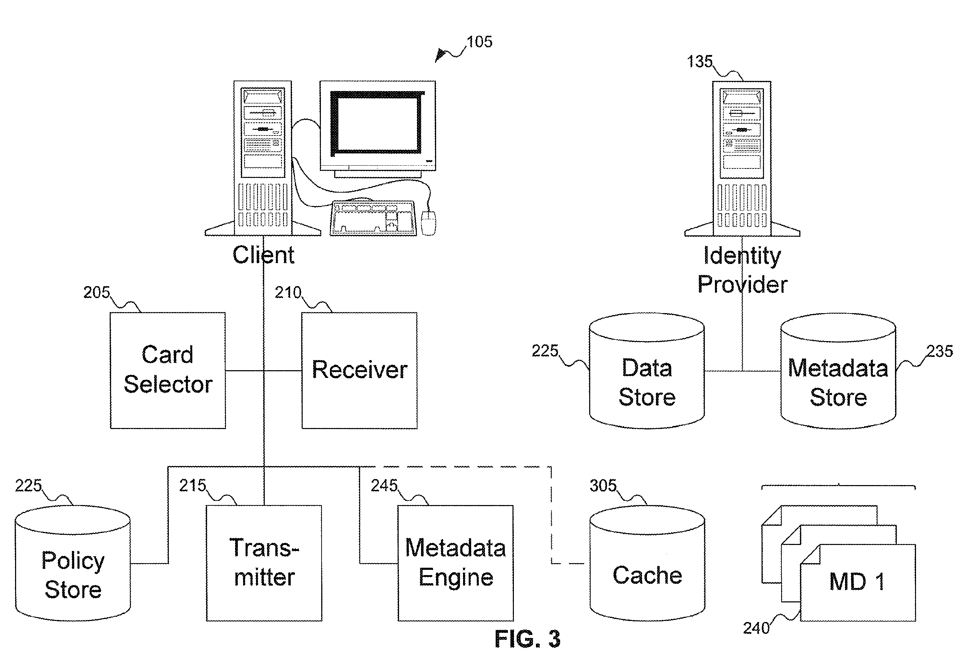

In the above described embodiments of the invention, it is assumed that all the pertinent metadata for information cards is stored on computer system 105. But this is not always the case. In some situations, identity provider 135 stores the metadata on information cards, as shown in FIG. 3. Computer system 105 still includes card selector 205, receiver 210, transmitter 215, policy store 225, and metadata engine 245. But identity provider 135 stores metadata store 235. As with the system of FIG. 2, metadata store 235 stores metadata about information cards. In the embodiment of FIG.3, identity provider 135 stores metadata store 235 because the metadata is not normally captured by the client computer system where the information card resides. For example, if the information card were stolen and used by an unauthorized third party, only identity provider 135 would store that information: no client computer system used by the user would know this fact.

In the system of FIG. 3, operation is basically the same as in the system of FIG. 2. But instead of locally accessing metadata store 235, computer system 105 requests the metadata from metadata store 235 on identity provider 135.

When and how computer system 105 receives metadata 240 from identity provider 135 depends on the implementation of the system. In one embodiment, computer system 105 requests metadata 240 from identity provider 135 at the same time that computer system 105 requests a security token from identity provider 135. In this embodiment, computer system 105 cannot inform the user about the metadata before the user selects the information card, as the information card is selected before the security token is requested.

In another embodiment, computer system 105 can request metadata 240 from identity provider 135 in request that is out-of-band from a request for a security token. In this embodiment, because computer system 105 can request metadata 240 before requesting the security token, computer system 105 can process the metadata. The user can then use this information before selecting an information card (and before computer system 105 requests a security token from identity provider 135).

In yet another embodiment, computer system 105 can inform identity provider 135 that computer system 105 is online. This communication can be part of a broadcast from computer system 105toanumber of identity providers. Then, identity provider 135 can make a decision whether it has any metadata that should be provided to computer system 105. If identity provider 135 has some metadata to provide to computer system 105, identity provider 135 can transmit this metadata to computer system 105 in an unsolicited communication. In this embodiment, the responsibility for the decision as to whether to transmit the metadata lies with identity provider 135.

In these embodiments where computer system 105 requests metadata from identity provider 135, computer system 105 can request metadata from each identity provider when the system connects to the network (or at some regular intervals thereafter: for example, once per day). Computer system 105 then uses this information, however requested and whenever received, to update cache 305. A person skilled in the art will recognize other ways in which computer system 105 can update cache 305. A person skilled in the art will also recognize that these update policies mean that cache 305 may be out-of-date when card selector 205 accesses the metadata from cache 305. These concerns exist, but it is better to use accurate (if slightly out-of-date) information in the presentation of information cards than to not have the metadata at all.

FIG. 3 shows policy store 225 on computer system 105 because policies, such as policy 230, might be applicable to multiple information cards, which could be managed by different identity providers. A person skilled in the art will recognize that policy store 225 can also be "outsourced" (that is, stored somewhere other than on computer system 105, although not necessarily on identity provider 135), to enable the use of the policies on multiple computer systems. In such a situation, computer system 105 would request copies of the policies, to be able to apply them to information cards as needed.

One way to address the problems of metadata management in the system of FIG. 3 is for computer system 105 to include cache 305. Cache 305 can store metadata about information cards of the user managed by various identity providers. This information can then be used to determine how to modify the presentation of information cards for the user. The issue then reduces to one of managing the update of cache 305.

Not shown in FIG. 3 is metadata store updater 245 (from FIG. 2). Where computer system 105 includes cache 305, metadata store updater 245 can update cache 305, both based on actions taken by the user and based on metadata information received from identity provider 135.

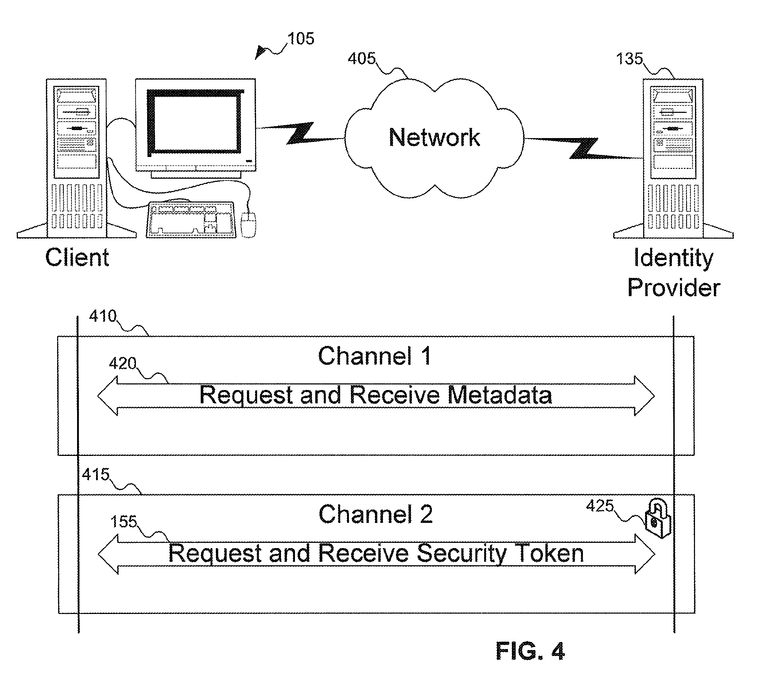

In situations where computer system 105 requests the metadata from identity provider 135 separately from the request for the security token (which can be called an out-of-band request for the metadata), there can be multiple channels used for communications between computer system 105 and identity provider 135. FIG. 4 shows the client and identity provider in the system of FIG. 3 communicating via multiple channels. A person skilled in the art will recognize that a channel can refer to multiple requests at different times along similar (or identical) paths between computer system 105 and identity provider 135, or that different paths can be used. In one embodiment, computer system 105 and identity provider 135 are both connected to a network, such as network 405. For example, network 405 can be a global network, such as the Internet. Alternatively, computer system 105 and identity provider 135 might be connected by other types of networks, such as a cellular network. (This embodiment might be used when the user is using a cellular telephone to authorize a transaction, with the card selector implemented on a cellular telephone or personal digital assistant.) In yet other embodiments, there can be multiple different types of networks connecting computer system 105 and identity provider 135.

A *channel* is a means of communication between computer system 105 and identity provider 135. A channel can include the physical constructs connecting computer system 105 and identity provider 135, the protocols used to manage the communication, and an identifier of a particular communication session between computer system 105 and identity provider 135, among other elements. For example, where both computer system 105 and identity provider 135 are connected to the Internet, the physical constructs between computer system 105 and identity provider 135 can include routers and cabling (or wireless routers, if some portion of the channel includes wireless communication). If a channel requires that communications travel between computer system 105 and identity provider 135 along a specific sequence of machines, this information form part of the definition of the channel. On the other hand, if the path between the machines is not critical, communications might travel along different paths, even while part of the same channel. Similarly, communications along different channels might include different protocols used to manage the message traffic. Finally, even if identical paths and protocols are used, communications between computer system 105 and identity provider 135 might involve different channels, if the communications are considered to be part of different sessions between the machines.

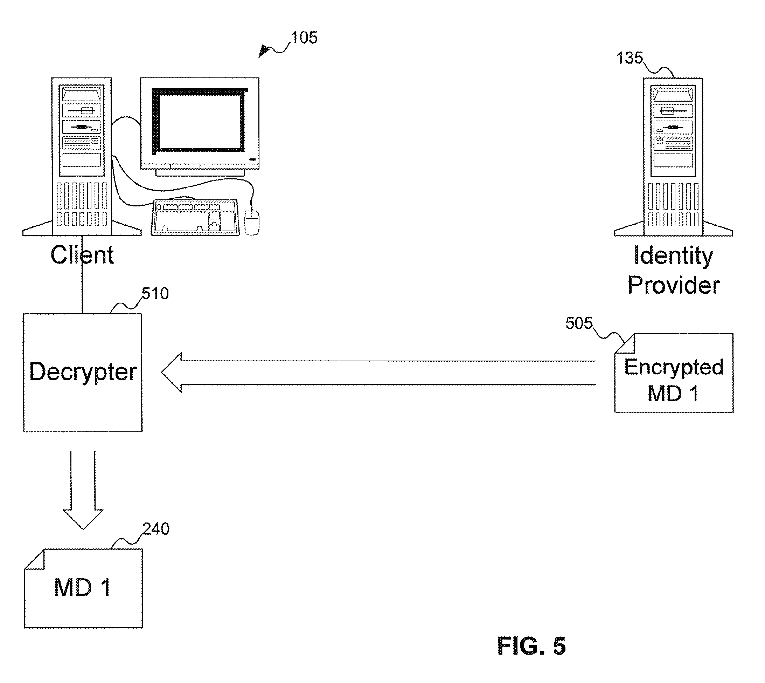

In FIG. 4 computer system 105 and identity provider 135 are shown communicating using two different channels. The specifics of what distinguish channel 410 from channel 415 can vary as discussed above, and are not important, beyond the fact that two different channels are being used. Channel 410 is shown as being used to manage the request for and receipt of the metadata from identity provider 135, as shown in communication 420. Channel 415 is shown as being used to manage the request for a receipt of the security token from identity provider, as shown in communication 155. Because the security token contains important information about the user, channel 415 is encrypted, as shown by encryption icon 425. Channel 410 is not shown as encrypted, because the information being transmitted is not considered to be sensitive (hence the lack of an encryption icon in channel 410). But if the metadata were considered sensitive, channel 410 could be encrypted as well. FIG. 5 shows the transmission of encrypted metadata in the system of FIG. 3. In FIG. 5, identity provider 135 is shown as transmitting encrypted metadata 505 to client 105. This can occur if metadata 240 includes sensitive information that the user might not want to be publicized. In this embodiment, client 105 can include decrypter 510, which can decrypt encrypted metadata 505, to retrieve metadata 240. To be able to properly decrypt encrypted metadata 505, client 105 and identity provider 135 need to agree on the parameters of encryption: a person skilled in the art will recognize how different forms of encryption can be used to encrypt metadata 240 to encrypted metadata 505.

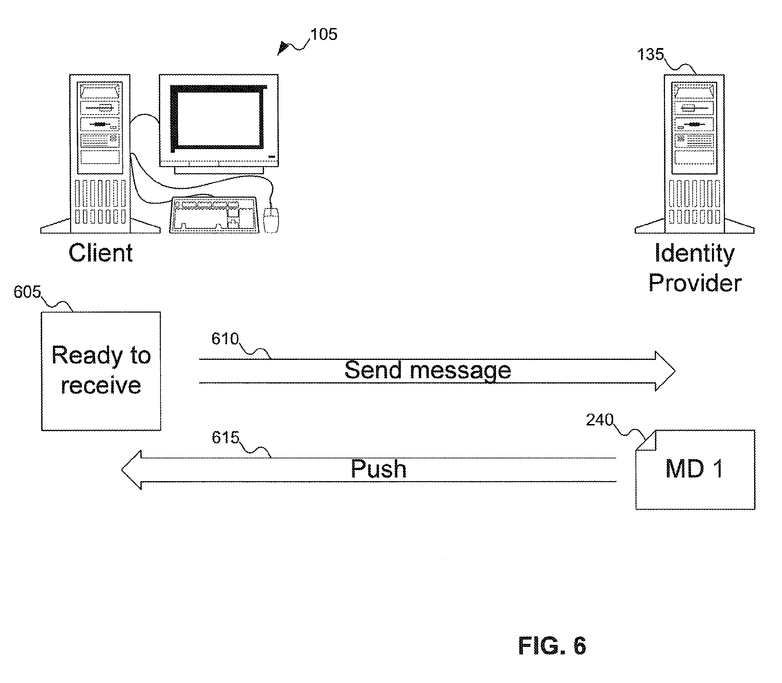

As discussed above with reference to FIG. 3, in one embodiment computer system 105 informs identity provider 135 that it is available, and let identity provider 135 decide when to provide metadata 240 to computer system 105. This model, where the recipient of the information is not necessarily expecting it, is sometimes called a push model. FIG. 6 shows the system of FIG. 3 operating as a push model. In FIG. 6, computer system 105 sends message 605, informing identity provider 135 that computer system 105 is ready to receive metadata, to identity provider 135, shown as communication 610. Then, when identity provider 135 is ready to transmit metadata 240, identity provider 135 pushes metadata 240 to computer system 105, shown as communication 615. Because metadata 240 is not sent in a response to a specific request (nor necessarily at a time that suggests metadata 240 is being sent responsive to message 605), metadata 240 is being pushed to computer system 105.

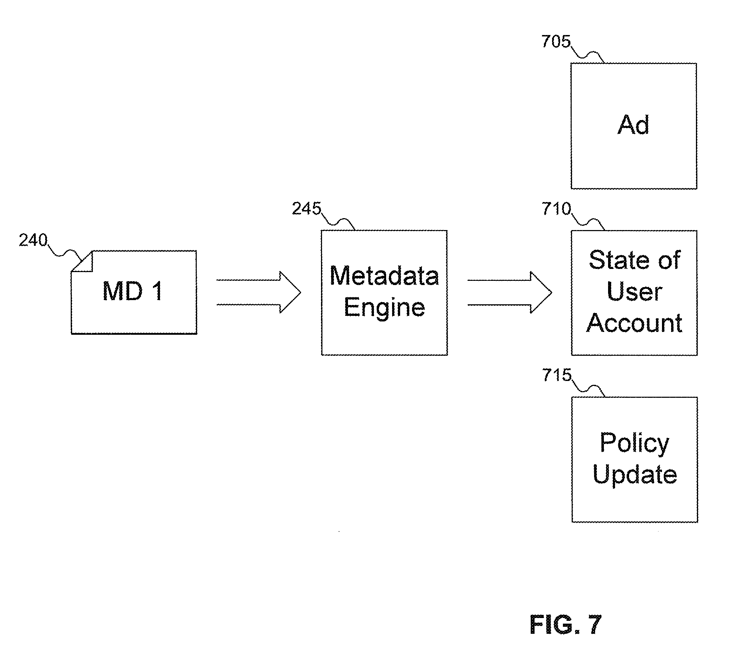

FIG. 7 shows the metadata engine of FIGs.2 and 3 using metadata to provide information to a user. In FIG. 7, metadata engine 245 uses metadata 240 to provide information to the user. Among other possible uses for metadata 240, metadata engine 245 can provide the user with advertisement 705 (for example, within a window of the card selector), state of the user's account 710, or policy update 715.

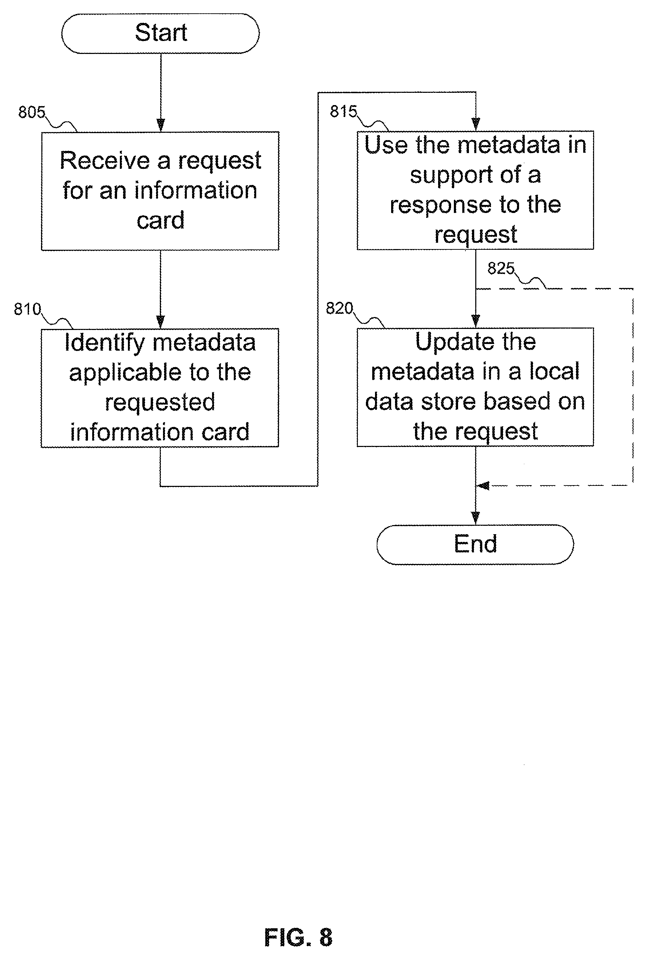

FIG. 8 shows a flowchart of a procedure to use metadata to provide information to a user in the systems of FIGs. 2 and 3. In FIG. 8, at block 805, the system receives a request for an information card. As described above with reference to FIG. 2, this request can have been directed to the card selector. At block 810, the system identifies metadata applicable to the information card. As described above with reference to FIGs. 2-6, the system can use metadata that was either locally available or remotely stored (such as at an identity provider). At block 815, the system uses the metadata in support of a response to the request for the information card. Finally, at block 820, the system can update a local data store that tracks metadata. As shown by arrow 825, block 820 is option and can be omitted.

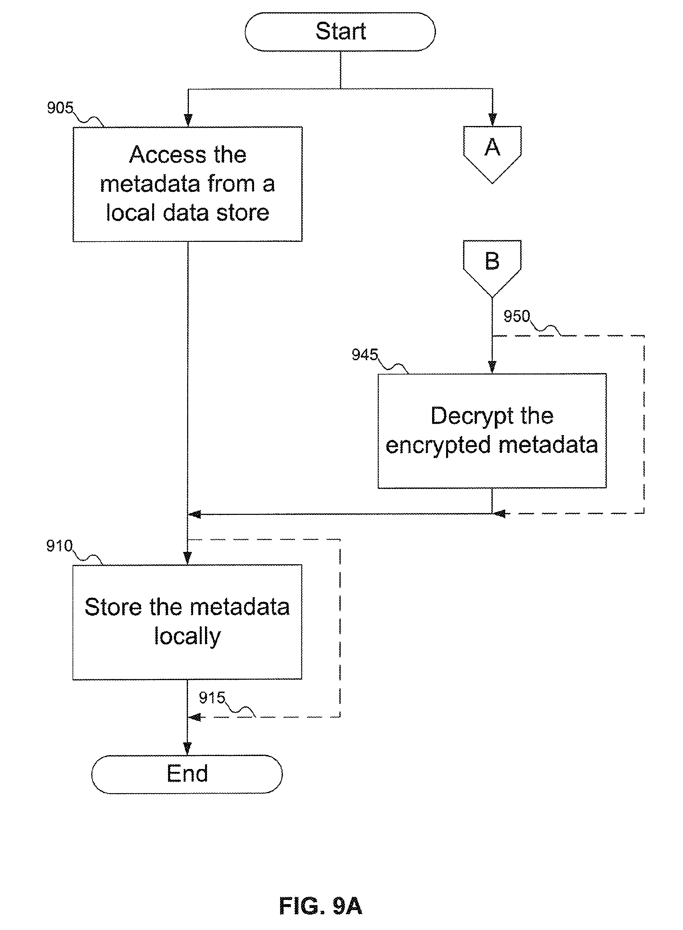

FIGs. 9A-9B show a flowchart of a procedure for a card selector to receive metadata in the system of FIGs.2 and 3. On FIG.9A, at block 905, if the metadata is stored locally, the system can access the metadata from the local data store. Then, at block 910, the system can update the local data store, if needed (for example, based on how user uses the system, perhaps after reviewing the metadata). The system does not need to store the metadata locally: block 910 is optional, as shown by arrow 915.

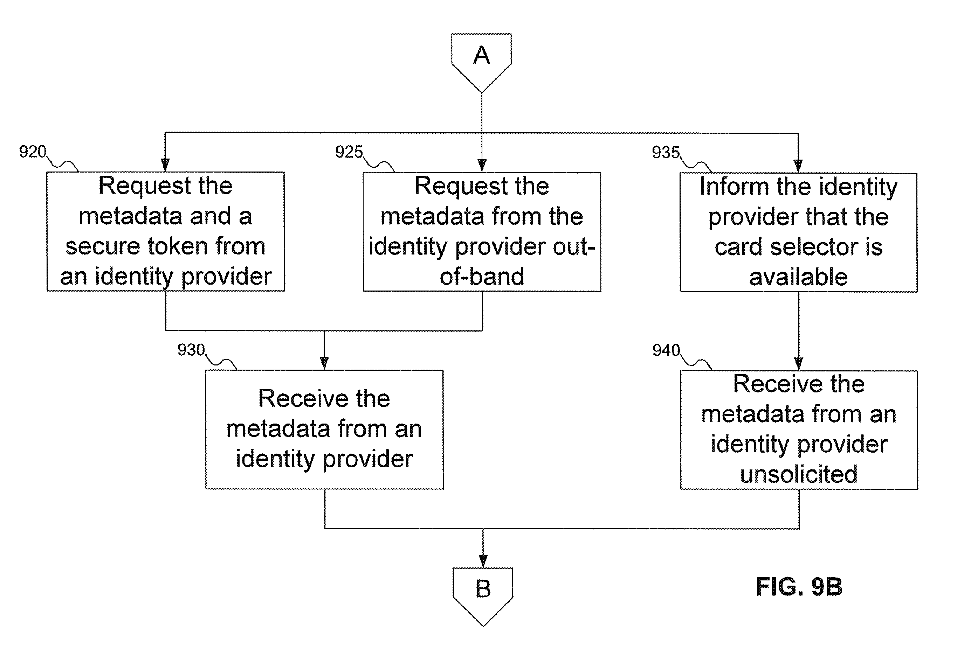

On the other hand, if the metadata is received from an external source, such as an identity provider, then at block 920 (on FIG. 9B) the system can request the metadata from the identity provider along with a request for a security token. While in this embodiment the metadata would not be used to aid in processing the current request for an information card (as discussed above with reference to FIGs. 3-6), a person skilled in the art will recognize that the metadata can be used in processing a later request for an information card. In another embodiment, the system can request the metadata from the identity provider in an out-of-band request, as shown in block 925. In either of these embodiments, at block 930, the system can receive the metadata from the identity provider: depending on the embodiment, the system can receive the metadata in parallel with the security token or not.

In yet another embodiment, such as the push model discussed above with reference to FIG. 6, the system can inform the identity provider that it is available, as shown in block 935. If the identity provider has metadata to push to the system, then at block 940 the system can receive the metadata from the identity provider in an unsolicited communication.

In any embodiment where the system receives the metadata from the identity provider, if the identity provider encrypted the metadata, then the system can decrypt the metadata, as shown in block 945 (on FIG. 9A). As shown by arrow 950, block 945 is optional, and can be omitted. The system can also store the metadata in a local data store, as shown in block 910; again, block 910 is optional, as shown by arrow 915.

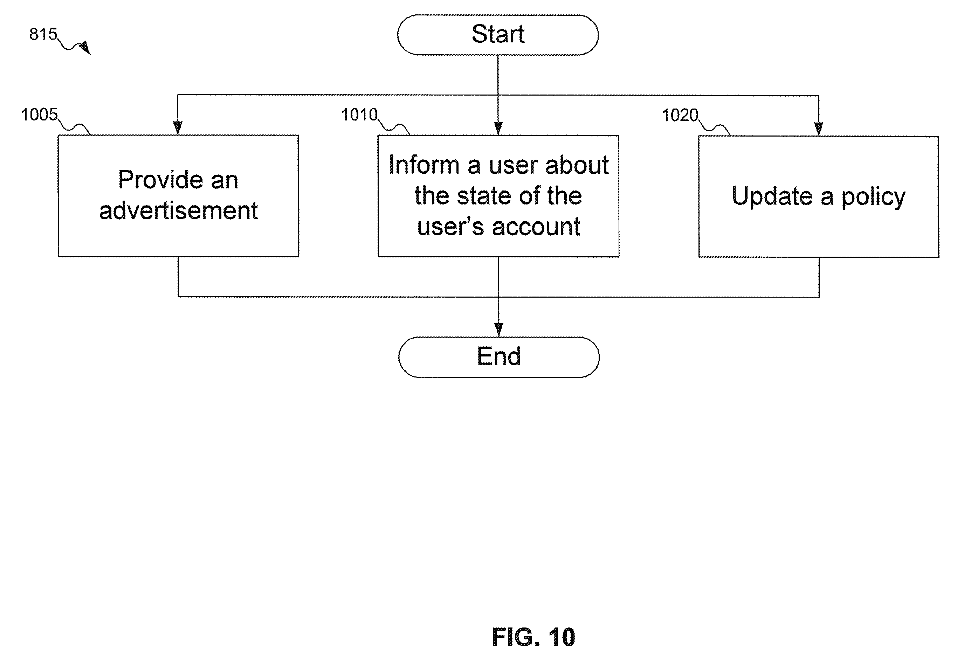

FIG. 10 shows a flowchart of a procedure to use the metadata to provide information to a user in the systems of FIGs. 2 and 3. At block 1005, the system can use the metadata to provide an advertisement to the user. At block 1010, the system can use the metadata to inform the user about the state of the user's account. And at block 1015, the system can use the metadata to update a policy.

The following discussion is intended to provide a brief, general description of a suitable machine in which certain aspects of the invention may be implemented. Typically, the machine includes a system bus to which is attached processors, memory, e.g., random access memory (RAM), read-only memory (ROM), or other state preserving medium, storage devices, a video interface, and input/output interface ports. The machine may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, or a system of communicatively coupled machines or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine may include embedded controllers, such as programmable or non-programmable logic devices or arrays, Application Specific Integrated Circuits, embedded computers, smart cards, and the like. The machine may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 545.11, Bluetooth, optical , infrared, cable, laser, etc.

The invention may be described by reference to or in conjunction with associated data including functions, procedures, data structures, application programs, instructions, etc. which, when accessed by a machine, result in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, and other tangible, physical storage media. Associated data may also be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Having described and illustrated the principles of the invention with reference to illustrated embodiments, it will be recognized that the illustrated embodiments may be modified in arrangement and detail without departing from such principles, and may be combined in any desired manner. And although the foregoing discussion has focused on particular embodiments, other configurations are contemplated. In particular, even though expressions such as "according to an embodiment of the invention" or the like are used herein, these phrases are meant to generally reference embodiment possibilities, and are not intended to limit the invention to particular embodiment configurations. As used herein, these terms may reference the same or different embodiments that are combinable into other embodiments.

## Claims

1. An apparatus, comprising:
a receiver (210) at a card selector (205) to receive a request for an information card (220);
an identifier to identify metadata (240) applicable to said information card (220); and
a metadata engine (245) adapted to use said metadata (240) in support of a response from said card selector (205) to said request for said information card (220).

2. An apparatus according to claim 1, wherein:
the apparatus further comprises a metadata store (235) adapted to store said metadata (240) local to said card selector (220); and
the metadata engine (245) is operative to access said metadata (240) from the metadata store (235).
and optionally further comprises a metadata store updater (250) to update the metadata store (235) that stores said metadata (240) based on said request for said information card (205).

3. An apparatus according to claim 1 or claim 2, wherein the receiver (210) is operative to receive said metadata (240) from an identity provider (135), optionally further comprising a transmitter (215) adapted to transmit a request (420) for said metadata (240) to said identity provider (135) from said card selector (205).

4. An apparatus according to claim 3, wherein the transmitter (215) is operative to transmit said request (420) for said metadata (240);
in a request for a security token (160) from said identity provider (135), or
in a request that is out-of-band from a second request (155) for a security token (160) from said identity provider (135).

5. An apparatus according to claim 4, wherein:
the receiver (210) is operative to receive encrypted metadata (1105) from said identity provider (135); and
the apparatus further comprises a decrypter (1110) adapted to decrypt said encrypted metadata (1105).

6. An apparatus according to claim 3, wherein the receiver (210) is operative to receive said metadata (240) in an unsolicited communication (615) from said identity provider (135), optionally further comprising a transmitter (215) adapted to transmit a message (605) to said identity provider (135) that said card selector (220) is available to receive said metadata (240) from the identity provider (135).

7. A method for using metadata, comprising:
receiving (805) at a card selector (205) a request for an information card (220);
identifying (810) metadata (240) applicable to the information card (220); and
using (815) the metadata (240) to support a response from the card selector (205) to the request for the information card (220).

8. A method according to claim 7, wherein identifying (810) metadata (240) applicable to the information card (220) includes accessing (905) a data store (235) local to the card selector (205),
optionally further comprising updating (820) the local data store (235) containing the metadata (240) based on the request for the information card (220).

9. A method according to claim 7, wherein identifying (810) metadata (240) applicable to the information card (220) includes receiving (930) the metadata (240) from an identity provider (135).

10. A method according to claim 9, wherein receiving (930) the metadata (240) from an identity provider (135) includes
requesting (920) the metadata (240) from the identity provider (135) in a request for a security token (160) from the identity provider (135), or
requesting (925) the metadata (240) from the identity provider (135) in a request that is out-of-band from a second request for a security token (160) from the identity provider (135).

11. A method according to claim 10, wherein requesting (925) the metadata (240) includes:
receiving (925) an encrypted metadata (1105) from the identity provider (135); and
decrypting (945) the encrypted metadata (1105).

12. A method according to claim 9, wherein receiving (930) the metadata (240) includes requesting (920, 925) the metadata (240) from the identity provider (135) by the card selector (205).

13. A method according to claim 9, wherein receiving (930) the metadata (240) includes receiving (940) the metadata (240) from the identity provider (135) in an unsolicited communication from the identity provider (135), optionally informing (935) the identity provider (135) that the card selector (205) is available to receive metadata (240) from the identity provider (135).

14. A computer program, which when executed by a machine, will perform the method of any one of claims 7 to 13.

15. The computer program of claim 14, when stored on a computer-readable storage medium.
